# EUROPEAN PATENT SPECIFICATION

(11) **EP 4 030 934 B1**
(45) Date of publication and mention of the grant of the patent: **04.03.2026**
(21) Application number: 19804883.7
(22) Date of filing: 18.09.2019
(51) Int. Cl.: A23N 7/00

(54) **A MACHINERY TO PEEL BANANAS AUTOMATICALLY**
MASCHINE ZUM AUTOMATISCHEN SCHÄLEN VON BANANEN
MACHINE POUR PELER AUTOMATIQUEMENT DES BANANES

(43) Date of publication of application: 27.07.2022
(73) Proprietor: Tropical Food Machinery S.r.l, 43011 Busseto (PR) (IT)
(72) Inventor: CONCARI, Stefano, 43123 Parma (PR) (IT)
(74) Representative: Emmi, Mario
(86) International application number: PCT/IT2019/000074
(87) International publication number: WO 2021/053697

(56) References cited:
- WO-A1-2017/185305
- AU-A- 8 739 175
- BR-A- 9 101 943
- US-A- 1 093 762

## Description

### Technical field

The present invention relates to the technical field of machineries for the fruit and vegetable field.

In particular, the invention relates to an innovative machinery capable of peeling bananas automatically in a functional and efficacious manner.

### Brief outline of the prior art

The bunch of bananas (also called the "hand of bananas") which is processed is generally formed by four or five bananas joined to each other by means of a thallus. The degree of ripening thereof is classified through numeric values which go from zero to seven. Bananas which are ripe enough have a degree of ripeness comprised between four and seven.

Bananas which are ripe enough are processed depending on the needs in order to produce various products, derived from the fruit, to be sold on the market. For example, mashed bananas or other derivatives of this fruit may be produced.

In industrial production, in order to process bananas to sell a final product on the market, it is necessary to peel them.

In order to process the fruit, it is obviously necessary to peel it, that is to peel correctly, trying to maintain safe the fruit inside.

In the traditional system, the "hand of bananas", still green, is manually separated to the single units to then be stocked into boxes and ripened in suitable ripening chambers. Then (after a storage of 4 or 5 days) they are extracted and fed to the manual peeling system.

It is clear that manual processing is expensive and slow since it requires the arrangement of various operators who are arranged along a processing path (generally a conveyor belt) and separate the single bananas of the bunch and then peel them one by one so as to feed them to the subsequent phases, depending on needs.

This kind of processing is obviously slow and is not suitable for industrial production on a large scale.

Moreover, the product which is manually peeled and put onto a conveyor belt which only subsequently brings the product into the processing machinery, will result long aired, thus being oxidized and losing a good part of the nutritional qualities thereof.

Some machineries for processing bananas automatically exist in the prior art.

For example, one of them refers to Chinese publication CN 107136528 wherein a couple of counter-rotating rollers are provided and equipped, in their turn, on the periphery thereof with rotatable axes fitted with hooks through which a crushing and punching of the peel occurs so that the pulp exits from the skin.

This kind of solution has a very low efficiency since the crushing causes inevitably a certain loss of quantity of product.

Moreover, the solution is very complex structurally, since the rollers, as described, are equipped on the periphery with needles which are in their turn mounted on rotatable axes, so that, as a whole, it provides a strongly structurally complicated solution.

Finally, the product is laid down onto a single belt, thus causing an unavoidable contamination of the fruit which is mixed in contact with the outer part of the skin.

Therefore, even being automatic, this solution introduces many technical drawbacks.

A further publication is CN108652030.

In this case a transport system is described which leads the various bunches of bananas, hanging on a mobile support, towards a blade that cuts the base of the bunch (that is, the thallus) dropping the individual bananas into a funnel equipped with blades that pre-cut the peel.

At the outlet of the funnel two counter-rotating rollers are arranged provided with a plurality of needles at the periphery which grab the peel and further widen the pre-cut, thus making the fruit exit dropping downwards below the two counter-rotating rollers, onto a suitably prepared collection area, and with the peels that are moved on the back of the rollers.

However, the drawback of this solution is that it is strongly related to the geometry and then to the sizes of the processed fruit. In fact, the arrangement of the blades fixed in the funnel can cut properly only if the fruit has sizes suitable for the arranged blades.

Therefore, in many cases, different fruits of different sizes have an unsuitable pre-cut with the result of a bad separation.

In addition, the cut is carried out by blades that cut only when the product falls exactly onto them, also generating random cuts that often do not open easily during the subsequent processing. This implies a considerable waste of the final product.

A further machine for peeling bananas is known from BR 9 101 943 A.

### Summary of the invention

Therefore, the aim of the present invention is to provide an innovative machinery to process bananas, in particular to peel bananas thus separating the fruit from the peel, which resolves the said technical drawbacks.

In particular, the aim of the present invention is to provide a machinery which enables to obtain a quick and precise processing so as to maintain the fruit at best and enable to remove the whole or almost the whole fruit with no wastes.

Moreover, the aim of the present invention is to provide a machinery which can process bananas independently from shape and sizes of bananas under processing.

Another aim of the present invention is to provide a machinery which, depending on needs, is able to minimize the effects of oxidation on the fruit during the processing thereof, thus maintaining organoleptic properties at best.

These and other aims are therefore achieved with the present machinery to peel bananas, according to claim 1.

This machinery comprises at least one couple of counter-rotating rollers (1sx, 1dx) arranged at a certain distance between them. They are configured on the external surface thereof so as to be able to grab the banana by the peel and drag it into a separating cradle through the rotation thereof.

According to the invention, the separating cradle is delimited below by a grid (60) arranged at least partially under the two said counter-rotating rollers and configured to enable the passage of the flesh and block the peel.

Therefore, the grid acts as a sort of filter to make the flesh pass and prevent the peel from passing.

According to the invention, it is provided a cutting line (74sup, 61) arranged so as to overhang the grid (60).

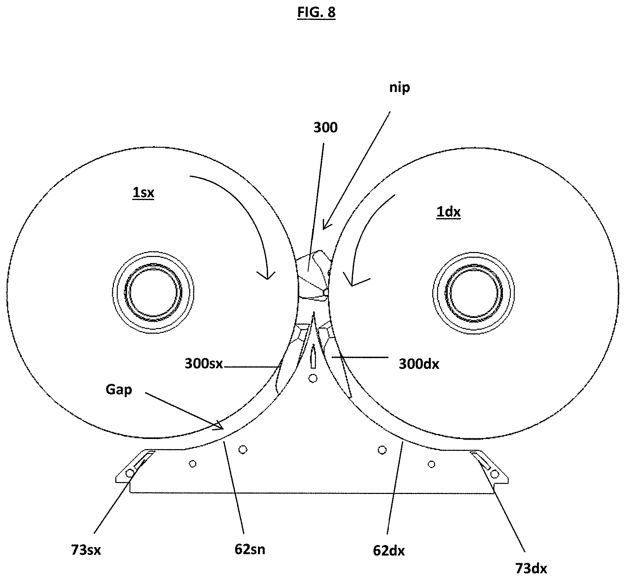

Preferably, it goes at least in part along the longitudinal direction of the said two rollers and it is arranged in the centre-line of the nip (see figure 8).

Therefore, this cutting line is arranged within the space between the two rollers where bananas pass so as to cause, in use, the separation into two symmetrical parts along the longitudinal direction of the banana dragged by said two rollers.

Practically, the bananas, grabbed by the rollers, are dragged onto said cutting line which separate each banana into two parts.

The grid forms a right back (62dx) on the right of said cutting line and a left back (62sx) on the left of said cutting line.

The right back is arranged at least partially under the corresponding right roller (1dx) and the left back is arranged at least partially under the left roller (1sx) and both of them at a certain distance from the respective roller.

Therefore, in this manner, a sliding channel is formed for each of the two parts of the banana.

According to this structural solution, in use, after the separation of the banana into the said two parts, one part of the banana will be in the space comprised between the right roller and the right back and the other part will be between the left roller and the left back and both of them are dragged along the respective back of the grid through the rotation of said rollers with the flesh turned towards the grid and the peel turned towards the surface of the roller which drags this part of the banana along the back.

Therefore, this action of dragging spreads the fruit onto the grid and forces it to pass through it. Therefore, this enables the passage of flesh through the grid and consequently the peel, in contact from its external part with the roller, is dragged by the roller to the sides of the grid towards an outlet area.

In this way, the fruit is wholly utilized with minimum waste and the peel does not contaminate the fruit. In fact, the peel is held by the rollers from the external part and the system avoids contacts between peel and flesh, since in addition, the peel is laid down on the sides.

The distance between grid and roller which forms the processing channel can be freely selected by the person skilled in the art according to preferred values that can optimize the result, for example considering the standard thickness of a skin and arranging a distance between roller and grid equal to or greater than a possible average standard thickness of the peels. In this manner, when the cut fruit enters the inlet of the channel delimited by roller and grid, it is pressed and spread along the grid by means of the dragging action.

Additional advantages may be inferred from the remaining dependent claims.

### Brief description of the drawings

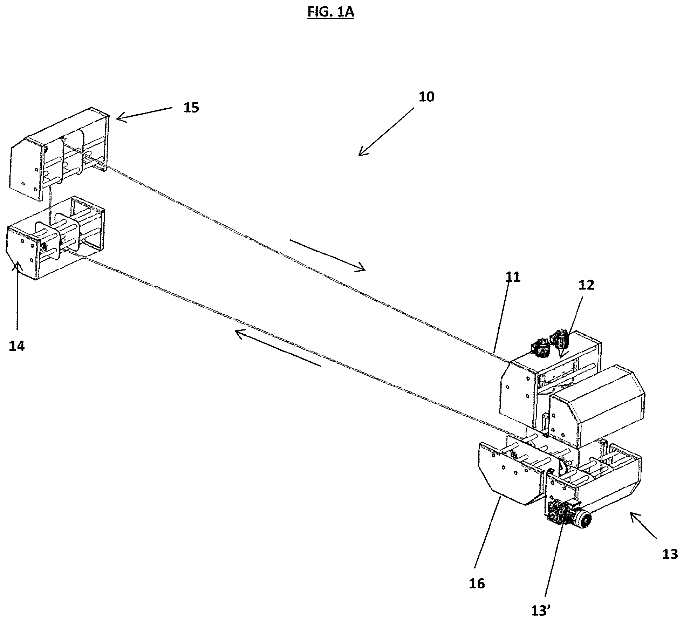

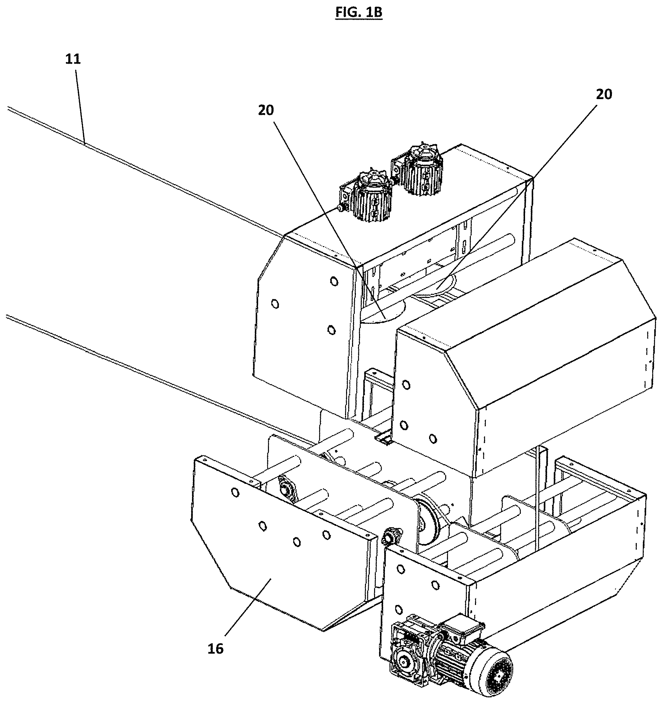

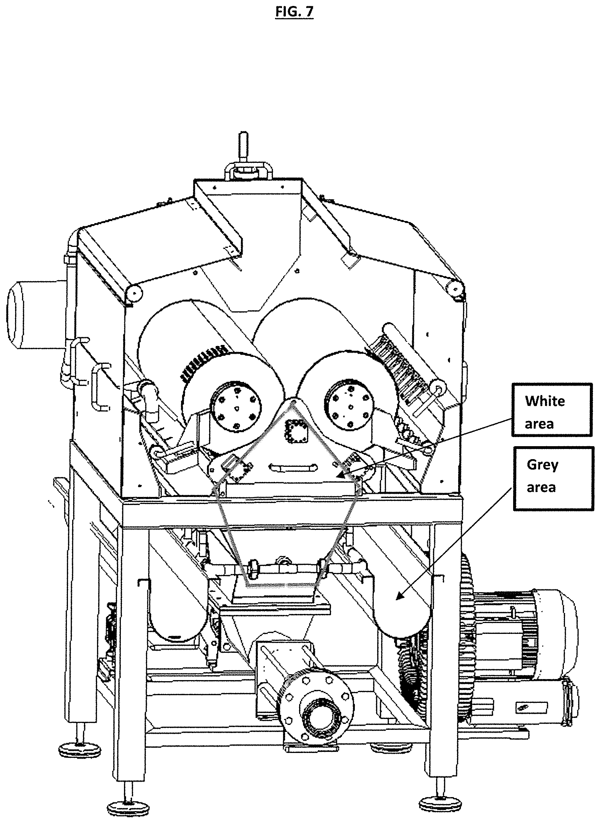

Additional features and advantages of the present machinery according to the invention will become apparent from the following description of preferred embodiments thereof, given only by way of non-limiting example, with reference to the attached drawings, wherein:
- Both figure 1A and figure 1B depict the transport system of the bunch of bananas so as to cut the connection thallus and separate them one by one;
- Figures from 2 to 4 and figure 7 outline 3D views of the machinery according to the invention;
- Figure 5 is a front view of a foil which forms the grid where the fruit passes;
- Figure 6 is a lateral view of the grid fitted with knives for processing the fruit;
- Figure 8 schematically depicts the front view of an exemplifying processing phase.

### Description of some preferred embodiments

The attached figures depict in detail the invention and a detailed description thereof is disclosed thereinafter.

Figure 1A depicts in axonometric view the transport system 10 of the bunches of bananas that are joined to one another by means of the peduncle (also called "thallus"). Bananas are separated one by one by cutting the peduncle.

The system 10 which operates this separation is constituted by a closed-ring transport cable 11 which is moved exactly as a mechanical belt. In particular, the said cable is passed into contact with a rotatable pulley keyed to the driving shaft and in this manner, the motion is transmitted to the cable.

Figure 1A schematically depicts the engine 13' which activates the driving shaft, not visible in figure for simplicity purposes.

Therefore, there are the cutting station 12 and the transmissions 13, 14, 15 through which the moving belt passes so as to assume the closed-ring shape.

The transmission 13 is fitted with engine 13'.

The two arrows of figure 1A indicate the movement of the cable, preferably made of steel, which moves the bunches of bananas hanged to the cable 11 towards the cutting station 12.

The cutting station 12 is particularly simple since it is constituted by two counter-rotating circular blades 20 (see figure 1B) which rotate by means of suitable rotary engines.

Preferably, the cable 11 passes above the blades in the space comprised between the two rotary axes so that the blades intercept the base of the thallus and cut it, thus separating the bananas of the bunch one by one.

The bananas cut one by one drop onto the underlying belt which directs them towards the processing machinery by means of a flight elevator which unloads them into said machinery specific subject of the present invention.

The cutting station also provides a switch which enables to unload laterally the cut thalli into a screw conveyor for ejecting them, thus preventing the thallus from mixing with the fruit intended for processing.

The cutting and separating station of the thallus shortly described above is however prior art per se and it is not the specific subject of the present invention and thus it will not be described further.

Going in further detail of the description of the invention, figures from 2 to 4 depict some axonometric views of the machinery subject of the invention.

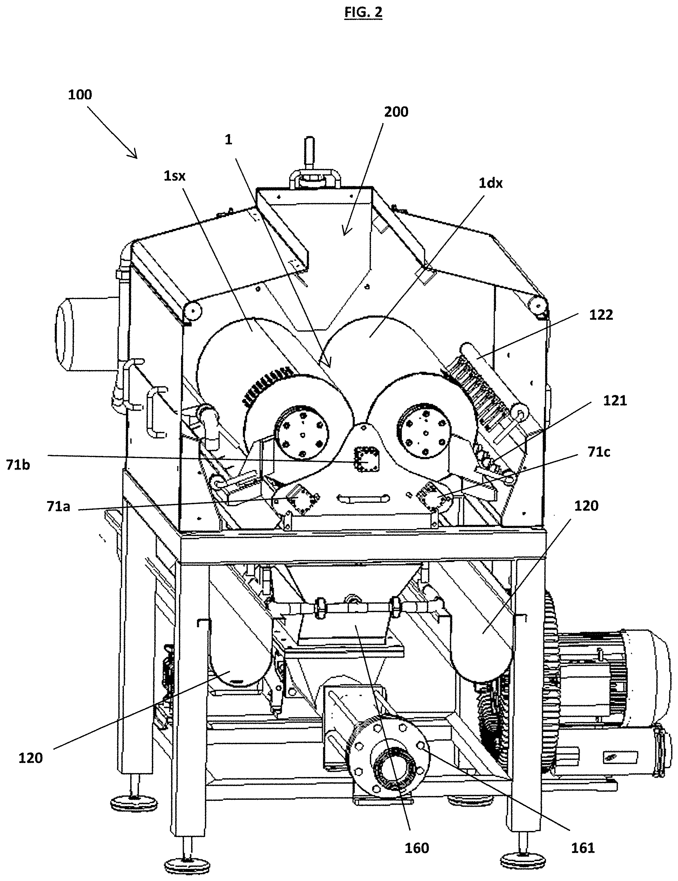

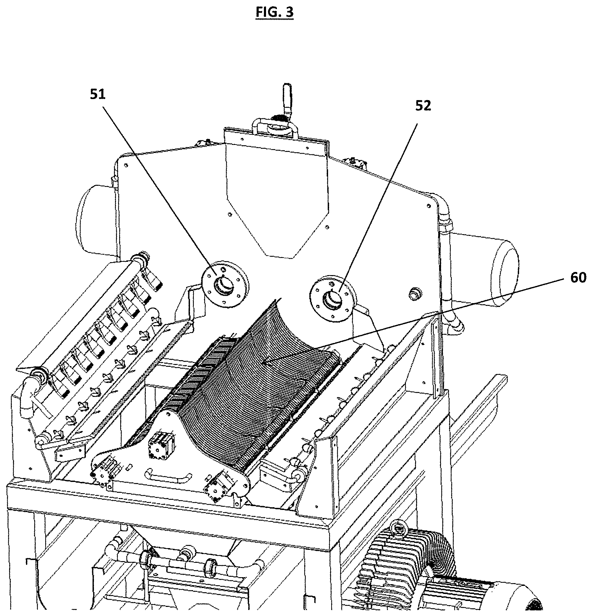

Figure 2 depicts the whole machinery 100, i.e., fitted with counter-rotating rolls 1 (practically, one right roller 1dx and one left roller 1sx) for processing the product, while figure 3 removes the rollers in order to highlight an underlying grid 60.

The external surface of the two counter-rotating rollers is fitted with a plurality of roughnesses or needles/hooks (similar to fish-hooks) which serve for better grabbing the fruit peel by punching and then to drag the fruit towards the separating "cradle".

In a possible solution the rollers are covered externally by a punched plate which forms a series of roughnesses which hole and drag the fruit, thus dragging it into the space interposed between the two processing rollers.

Other equivalent systems for obtaining roughnesses onto the processing surface of the rollers can be provided without departing from the scope of the present invention.

The two rollers are spaced from each other so as not to press the product and arrange it according to the longitudinal length thereof. Therefore, they are arranged so as to form a "nip", i.e., a space for the passage of the product in the point with the lowest transversal distance between them, comprised in a range which can go from approximately 20mm to approximately 30mm, preferably from 22mm to 26mm and even more preferably from 24mm to 26mm.

Figure 8 indicates the "nip", i.e., the point with the lowest distance between the two externals surfaces of the rollers and in which the banana 300 is arranged before being cut longitudinally.

In fact, the diameter of the bananas is more or less standard and it does not diverge a lot in the various ripe products suitable for being processed and therefore the above-mentioned ranges, in particular the preferred one, are suitable for ensuring a good dragging of the product by the rollers without crushing the banana inside the still intact peel (therefore before starting the processing process described thereinafter) and making the rollers grab the banana between the rollers in a longitudinal position (see figure 8 banana 300).

Therefore, in this manner the fruit is dragged into the underlying grid 60 fitted with suitable laminas, and described thereinafter, thus preventing it from being squashed but only "carrying" it onto the grid.

Then figure 3 highlights the attachments (51, 52) for the rotating shaft of the two rollers, which shafts are dragged into rotation by suitable engines.

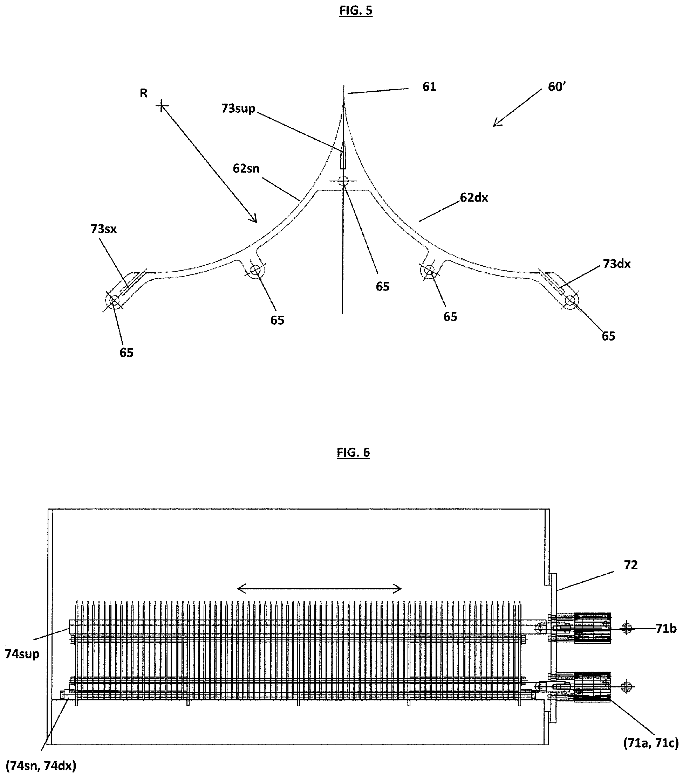

As depicted in figure 3, under the above-mentioned rollers 1 the separating grid 60 is provided formed by a plurality of laminas with a cusp profile which are packed together in succession so as to prevent the peel from passing into the area below this grid and thus facilitating the outflow of the peel towards the sides. The fruit which is instead particularly soft, is pulped and passes through the aforementioned grid or grating in other words. Substantially the packed laminas are at a certain distance between them, determining in the whole the passage grid (see for example figure 6 which depicts the pack of blades in a side view).

For this purpose, the grid 60 has a front profile (evident from figure 3 too) as per figure 5 and it is obtained by a succession of laminas 60' of figure 5 packed together (see figure 6).

Each lamina 60' is formed in fact by two parts (a right one and a left one) and with each part having a back (62dx, 62sn) with a predetermined radius of curvature R (for example a portion of circumference). The two parts are perfectly symmetrical to each other and end in a superior cusp (a tip in frontal view).

In fact, figure 5 depicts the cusp 61 and the curved surfaces (62dx, 62sn) which form the sliding surfaces of the peel, i.e. the back of the laminas.

Therefore, the curved shape with cusp 61 has many advantages.

The two curved surfaces (62dx, 62sn) can, even partially, retrace the radius of curvature of the rollers in front of them and they can be arranged perfectly under the rollers with no interference with the rotation thereof even being quite close to them and thus forming the channel for the passage of the product.

For example, figure 8 indeed depicts the "gap", that is, the channel for the passage which is formed by the relative roller and the relative back. A radius of curvature of the back can thus be created such that the shape of the back follows more or less the shape of the roller thus creating a "gap" with constant width (distance between the external surface of the roller and the surface of the back towards the roller).

In practice, figure 8 depicts a channel which maintains this constant "width" for a good part of the length thereof.

This enables the positioning of the rollers close to the grid since the grid on the whole retraces part of the curved profile of the rollers and in this manner, it is obtained a good thrust of the fruit towards the grid due to the action of rotation of the rollers.

In this manner, a system for adjusting the "gap" can easily be provided and it is also possible a solution in which, for example, the "gap" tightens slightly from the cusp towards the end of the back thus further squashing the product or vice versa.

Moreover, the two curved surfaces (the backs 62dx, 62sn), as explained thereinafter, form two ramps from the cusp towards the opposite ends which facilitate the lateral ejection of the peel, while the separation occurs on the path.

The parts indicated with number 65 refer to the holes for the passage of fastening axes to the bearing structure (frame) of the machinery.

As depicted in figure 6 and as inferable from figure 3, the grating is thus formed by a succession of such laminas 60' spaced between them with such a distance to prevent the peel from passing through such spaces and to enable the passage of the flesh which is moved forward through the grating by the effect of thrust of rotation of the rollers and then is pulped.

Going temporarily back to figure 2, it highlights three actuators (71a, 71b, 71c) arranged at the three tops of a cusp-shaped external lamina (also called front cover and it could be of other shapes since it is part of the external casing) which closes the previously-described package of laminas 60'.

Each one of the three actuators moves a cutting blade, preferably according to an alternate forward-backward motion.

Going to figure 6, it highlights the above-mentioned actuators (71a, 71b, 71c) together with the front cover 72 and the three knives or blades (74sup, 74sn, 74dx) (the upper one 74sup and two lower ones 74sn e 74dx) moved by said actuators.

Preferably, actuators move the knives according to an alternate motion as per the double direction of arrow of figure 6.

Going to figure 5, the three above-mentioned knives are arranged in suitable housings obtained in each one of the laminas 60', in particular in the housings 73sup and 73dx and 73sx which correspond to the cusp and to the two end sides.

The housing (73sup) is a closed housing obtained in each lamina 60' so as to form a channel for the insertion and sliding of the blade. The lamina ends actually in a cusp so as to form a cutting edge which continues thus intercepting the blade arranged in the housing (73sup) since this blade is exposed outside the housing in the space comprised between a lamina and the next one.

Alternatively, a solution with a housing (73sup) open above could be provided for exposing the cutting edge of the blade which would form the cusp itself.

The lateral housings for the lateral blades which operate the scraping are open above to make emerge the cutting edge of the blade.

Substantially, the upper blade together with the cusp of each lamina 60' cooperate for forming an upper cutting edge to separate the fruit into two halves in a symmetrical way, the two halves thereof being then correctly scraped in the terminal part of the grid by the two lateral blades once they have passed the back of the grid towards the said two ends. The peel is thus opened actually through the point of the cusps and the clean cut is finished by means of the upper blade which moves in alternate manner in the above-described housing.

At this point it is clear how the removal of the peel occurs operatively, with reference to figure **8****.**

The machine can have a closing covering above. Through the opening 200 above of the cover (see figure 2) the individual bananas previously separated as described above are dropped one by one by means of gravity.

Therefore, they are dropped between the two counter-rotating rollers which grab them by means of the roughnesses and thrust them into the separating cradle.

The separating cradle is formed at least by the grid with cusp and by the portion of rollers in front of the grid.

The cusp 61 of the grating operates a pre-cut; then the blade above (74sup) operates with an alternate motion, thus finishing the cut into two halves.

Figure 8 depicts the banana 300 arranged longitudinally along the length thereof which intercepts the cusp and is cut into two more or less symmetrical halves and therefore along a longitudinal length, that is the two parts (300sx, 300dx).

The combined action of the alternate motion of the above-mentioned upper blade together with the thrust of the counter-rotating rollers cuts the fruit into two halves more or less symmetrically along the longitudinal length thereof.

The shape of a banana is irregular but the diameter is almost invariable. While the banana is dragged, the nip between the rollers lays it onto the cutting edge still along a longitudinal direction determined by the rollers and it determines in fact a cut into two substantially symmetrical halves.

This structure is such that the banana, cut longitudinally into two halves, has the fruit facing the grid while the peel is grabbed from the outside by the needles of the rollers which continue to move (then to thrust and "spread") the half fruit along the back of the grating.

A half fruit is dragged and thrusted along the right part of the grid 62dx while the other half passes onto the left part 62sn of the grid and the separation flesh/ peel occurs during this dragging.

The lateral knives, still with the alternate motion thereof, process the peel on the internal part, i.e., towards the fruit, scraping the final parts of the fruit during the passage of the half fruit onto the ends where the knives are arranged.

A good part of the fruit is already thrusted through the grating during the path along the back of the laminas while the lateral knives remove the final leftovers of product.

The machinery described has a high efficiency since it enables to utilize the whole fruit with a minimum waste of fruit and at the same time preventing contaminations with the external peel which faces the rollers and is attached to them to be rejected laterally afterwards.

In this way, the peels are dragged laterally by the rollers and fall laterally into the underlying collecting lateral screw conveyors 120 (see figure 2), while the fruit flesh, filtered through the passage of grating 60, falls into the underlying part of the machinery which is intended for continuing the product processing.

In order to facilitate the detachment of the peels hooked by the roughnesses of the rollers and facilitate the fall thereof into the lateral screw conveyors 120, a series of scrapers can be provided arranged in proximity of the periphery of the rollers.

Figure 2 also depicts nozzles connected to a supply of liquid, such as water, and a supply of a gaseous flow, such as air.

More particularly, still with reference to figure 2, the nozzles 121 (present both on the left and on the right of the machinery) inject air while the nozzles 122 inject water, both of them towards the rollers.

Therefore, the nozzles are connected to an external circuit of air and water.

The action of water serves for washing the rollers from fibers of product while the air blade dries them.

A separated or combined action of air and water can obviously occur.

The said washing/drying circuits can be activated both continuously and intermittently during the processing. The intervals of action of the two circuits are managed automatically through PLC.

Describing the invention further, an additional important feature thereof is the underlying part of the machinery which contributes to obtain a high-quality product.

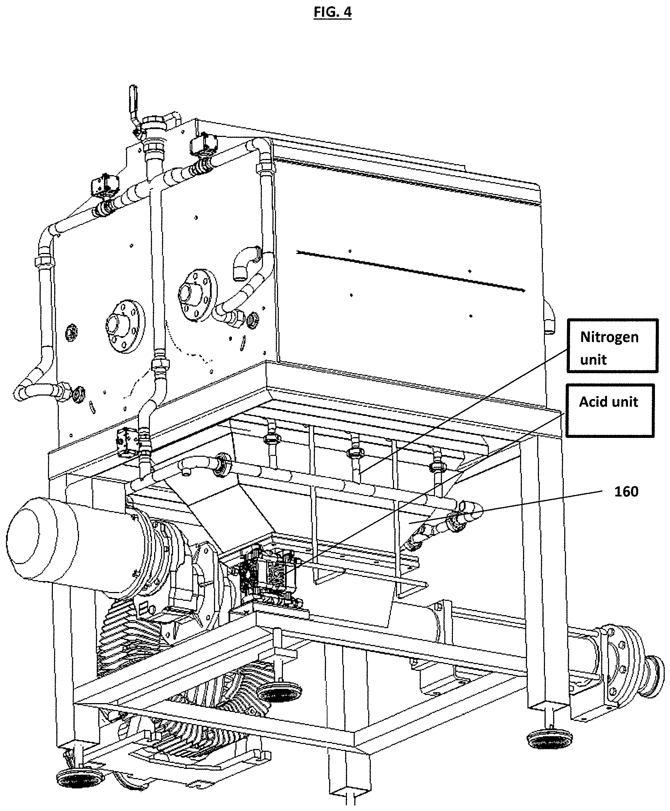

In particular, as depicted in figure 4 or figure 2, there is provided a collecting hopper 160 which directs the product in outlet from the grating towards a volumetric pump 161 which directs the product into machineries related to the further processing (such as formation of a purée and bottling or packaging in general).

According to a further additional feature of the invention, the area which starts from the central blade touches the two external ends of the grid and then it closes itself onto the volumetric pump, it forms an inert area of protected atmosphere (white area of figure 7) which is distinctly separated from the rest of the machinery, in particular from the area of the peels (grey area of figure 7). In this way, contaminations of the product are prevented and, by means of the protected atmosphere, the flesh of fruit does not oxidize and is of a high quality.

Therefore, as depicted in figure 4, it is highlighted the path of ducts which feeds nitrogen and/or ascorbic acid into the hopper 160.

The flow of nitrogen moves preferably from below towards the overlying rollers so as to be preferably counter-current with respect to the path for processing and moving forward the fruit. This favors the elimination of oxidizing air since nitrogen intercepts directly the flesh of fruit, thus preserving it at best.

Ascorbic acid in combination with nitrogen reduces oxidation of the product. Ascorbic acid is in liquid form.

It is dosed in a predetermined quantity.

Ascorbic acid falls into the white area while nitrogen goes up counter-current and exits partially between the two rollers and partially between the rollers and lateral blades.

The flesh practically reduced to a mass of pulp by the hopper is directed to the volumetric pump and, as evident from the description, the flesh has remained in the protected environment from the moment of the light exposure thereof.

This favours obtaining a high-quality product with a high speed of production.

However, it is clear that the described system could be used without necessarily create an inert environment even if, as described, the fluids injection which contribute to create an inert environment in the area where the flesh is processed contributes to a better quality of the product.

Therefore, it is also described here a machinery to peel bananas comprising at least a couple of counter-rotating rollers (1sx, 1dx) arranged at a certain distance between them so as to grab the banana by the peel and drag it into a processing cradle through the rotation thereof;
- According to this feature of the invention, at least some of the area where the product is processed in said machinery is configured to create and maintain an environment in protective atmosphere, for example through the injection of nitrogen and/or ascorbic acid.

## Claims

1. A machinery for peeling bananas comprising:
- At least one couple of counter-rotating rollers (1sx, 1dx) arranged at a certain distance between them and configured so as to grab the banana by the peel and drag it into a separating cradle through the rotation thereof;
- wherein:
- The separating cradle comprises a grid (60) arranged at least partially under said two counter-rotating rollers and configured to enable the passage of the flesh and block the peel;
- And wherein it is provided a cutting line (74sup, 61) arranged above the grid (60) in such a position as to cause, in use, the separation of the banana dragged by said two rollers into at least two parts (300sx, 300dx), the grid forming a right back (62dx) on the right of said cutting line and a left back (62sn) on the left of said cutting line and which form two sliding surfaces for the cut product, the right back arranging itself at least partially under the corresponding right roller (1dx) and the left back arranging itself at least partially under the left roller (1sx) and both of them at a certain distance from the respective roller;
**Characterized in that:**
the two ends of said right back (62dx) and left back (62sx) opposed to the said cutting line (74sup, 61) comprise respectively a second and a third cutting line (74sn, 74dx), wherein said second and third cutting line are in the form of a second and a third blade (74sn, 74dx) inserted respectively into a housing (73sx, 73dx), wherein said second and third blades are movable by means of at least one actuator (71a, 71c) to which they are connected.

2. The machinery, according to claim 1, wherein the said cutting line extends itself at least partially along the longitudinal direction of said two rollers, preferably wherein the cutting line is arranged in the center line of the minimum distance (nip) between the two external surfaces of the counter-rotating rollers.

3. The machinery, according to one or more of the preceding claims, wherein the said cutting line comprises at least one cutting blade (74sup), preferably wherein an actuator (71b) is comprised connected to the said cutting blade (74sup) so as to move the blade for facilitating the cut, preferably according to an alternate forward/back motion.

4. The machinery, according to one or more of the preceding claims, wherein said cutting line comprises a cusp-like shape of the said grid.

5. The machinery, according to one or more of the preceding claims, wherein the said cusp comprises a longitudinal housing (73sup) for arranging said cutting blade (74sup).

6. The machinery, according to claim 1, wherein said second and third blades are movable according to an alternate forward/back motion.

7. The machinery, according to one or more of the preceding claims, wherein said right back (62dx) and left back (62sx) have a curved profile, preferably wherein the radius of curvature (R) of said curved profile of the backs and the radius of curvature of the rollers is such that the said backs maintain a constant or substantially constant distance with respect to at least some of said external surface of the roller which they face.

8. The machinery, according to one or more of the previous claims, wherein the said grid is formed by a pack of laminas (61) packed to one another at a predetermined distance between them, preferably wherein each lamina (61) is in the same form of the other ones and provides a cusp (61) from which the right back (62dx) and the left back (62sx) depart.

9. The machinery, according to one or more of the preceding claims, wherein a hopper (16) is provided under the said grid (60) for collecting the flesh passing through the grid.

10. The machinery, according to one or more of the preceding claims, wherein one or more lateral screw conveyors (120) are comprised, preferably two lateral screw conveyors arranged on the two sides of the machine, for collecting the peels.

11. The machinery, according to one or more of the preceding claims, further comprising one or more scrapers arranged in proximity of the rollers so as to facilitate the detachment of the peels attached to the rollers and facilitate the fall thereof into lateral screw conveyors (120).

12. The machinery, according to one or more of the preceding claims, providing one or more nozzles arranged so as to inject one or more fluids into an area of the machine comprising at least the said hopper and the processing cradle, said fluids comprising fluids suitable for reducing the oxidation effect, such as nitrogen, ascorbic acid or a combination thereof, preferably wherein at least some of said nozzles are such as to inject the fluid counter-current with respect to the direction of fall of the flesh through the grid.

13. The machinery, according to one or more of the preceding claims, wherein the rollers are covered externally by a punched plate.

14. The machinery, according to one or more of the preceding claims, wherein the distance between the said two counter-rotating rollers is such that each banana is grabbed between said two rollers according to the longitudinal length thereof.

15. A method to peel bananas automatically and comprising the arrangement of two counter-rotating rollers configured to grab a banana externally by the peel, for example through the presence of roughnesses on the external surface of the said rollers, and of a separating grid having a plurality of openings and a cutting line arranged so as to cut into two parts the banana dragged by said two counter-rotating rollers, the separating grid extending itself at least partially under said rollers so that a right separating path and a left separating path are formed and delimited by the respective roller and by the respective portion of grid facing the roller, the method providing the rotation of said two rollers and the feeding of the bananas to the rollers by dropping them onto the rollers so that said rollers grab from the peel the whole banana and drag it onto the cutting line thus causing the separation thereof into two parts and wherein, through said rotation, one cut part continues being dragged by the left roller along the left separating path with the flesh into contact with the separating grid and the peel being held onto the surface of the left roller and the other part continues being dragged by the right roller along the right separating path with the flesh into contact with the separating grid and the peel being held onto the surface of the right roller and wherein each one of the two halves of the banana being scraped once they have reached the end part of the grid and this scraping operation being performed by a blade, movable by an actuator, arranged into a housing at said end part of the grid.

## Patentansprüche

1. Maschine zum Schälen von Bananen, die Folgendes umfasst:
- mindestens ein Paar gegenläufig rotierender Walzen (1sx, 1dx), die in einem bestimmten Abstand zueinander angeordnet und ausgelegt sind, um die Banane an der Schale zu greifen und sie durch ihre Drehung in ein Trenngestell zu ziehen,
- wobei
- das Trenngestell ein Gitter (60) umfasst, das zumindest teilweise unter den beiden gegenläufig rotierenden Walzen angeordnet und ausgelegt ist, um das Durchführen des Fruchtfleischs zu ermöglichen und die Schale zu blockieren,
- und wobei eine Schnittlinie (74sup, 61) bereitgestellt ist, die oberhalb des Gitters (60) in einer derartigen Position angeordnet ist, dass sie bei Gebrauch die Trennung der von den beiden Walzen gezogenen Banane in mindestens zwei Teile (300sx, 300dx) bewirkt, wobei das Gitter eine rechte Rückseite (62dx) auf der rechten Seite der Schnittlinie und eine linke Rückseite (62sn) auf der linken Seite der Schnittlinie bildet, die zwei Gleitoberflächen für das geschnittene Produkt bilden, wobei die rechte Rückseite sich zumindest teilweise unter der entsprechenden rechten Walze (1dx) anordnet und die linke Rückseite sich zumindest teilweise unter der linken Walze (1sx) anordnet und sich beide in einem bestimmten Abstand von der jeweiligen Walze anordnen,
**dadurch gekennzeichnet, dass**
die beiden Enden der rechten Rückseite (62dx) und der linken Rückseite (62sx), die der Schnittlinie (74sup, 61) gegenüberliegen, jeweils eine zweite und eine dritte Schnittlinie (74sn, 74dx) umfassen, wobei die zweite und dritte Schnittlinie in der Form eines zweiten und eines dritten Messers (74sn, 74dx) vorliegen, die jeweils in ein Gehäuse (73sx, 73dx) eingefügt sind, wobei das zweite und das dritte Messer mittels mindestens eines Aktors (71a, 71c), mit dem sie verbunden sind, bewegbar sind.

2. Maschine nach Anspruch 1, wobei sich die Schnittlinie zumindest teilweise entlang der Längsrichtung der beiden Walzen erstreckt, wobei die Schnittlinie vorzugsweise in der Mittellinie des Mindestabstands (Spalt) zwischen den beiden äußeren Oberflächen der gegenläufig rotierenden Walzen angeordnet ist.

3. Maschine nach einem oder mehreren der vorhergehenden Ansprüche, wobei die Schnittlinie mindestens ein Schneidmesser (74sup) umfasst, wobei vorzugsweise ein Aktor (71b) enthalten ist, der mit dem Schneidmesser (74sup) verbunden ist, sodass das Messer vorzugsweise gemäß einer abwechselnden Vorwärts-/Rückwärtsbewegung bewegt wird, um den Schnitt zu erleichtern.

4. Maschine nach einem oder mehreren der vorhergehenden Ansprüche, wobei die Schnittlinie eine scheitelpunktartige Form des Gitters umfasst.

5. Maschine nach einem oder mehreren der vorhergehenden Ansprüche, wobei der Scheitelpunkt ein Längsgehäuse (73sup) zum Anordnen des Schneidmessers (74sup) umfasst.

6. Maschine nach Anspruch 1, wobei das zweite und dritte Messer gemäß einer abwechselnden Vorwärts-/Rückwärtsbewegung bewegbar sind.

7. Maschine nach einem oder mehreren der vorhergehenden Ansprüche, wobei die rechte Rückseite (62dx) und die linke Rückseite (62sx) ein gekrümmtes Profil aufweisen, wobei der Krümmungsradius (R) des gekrümmten Profils der Rückseiten und der Krümmungsradius der Walzen derart beschaffen sind, dass die Rückseiten einen konstanten oder im Wesentlichen konstanten Abstand in Bezug auf mindestens einen Teil der äußeren Oberfläche der Walze, dem sie zugewandt sind, beibehalten.

8. Maschine nach einem oder mehreren der vorhergehenden Ansprüche, wobei das Gitter durch ein Paket von Lamellen (61) gebildet ist, die in einem vorbestimmten Abstand zueinander zu einem Paket zusammengefügt sind, wobei jede Lamelle (61) vorzugsweise die gleiche Form wie die anderen aufweist und einen Scheitelpunkt (61) bereitstellt, von dem die rechte Rückseite (62dx) und die linke Rückseite (62sx) abgehen.

9. Maschine nach einem oder mehreren der vorhergehenden Ansprüche, wobei unter dem Gitter (60) ein Trichter (16) zum Sammeln des durch das Gitter geführten Fruchtfleischs bereitgestellt ist.

10. Maschine nach einem oder mehreren der vorhergehenden Ansprüche, wobei ein oder mehrere seitliche Schneckenförderer (120) enthalten sind und vorzugsweise zwei seitliche Schneckenförderer auf den beiden Seiten der Maschine zum Sammeln der Schalen angeordnet sind.

11. Maschine nach einem oder mehreren der vorangehenden Ansprüche, ferner umfassend einen oder mehrere Abstreifer, die in der Nähe der Walzen angeordnet sind, sodass sie das Ablösen der an den Walzen angebrachten Schalen erleichtern und deren Fall in seitliche Schneckenförderer (120) erleichtern.

12. Maschine nach einem oder mehreren der vorhergehenden Ansprüche, die eine oder mehrere Düsen bereitstellt, die derart angeordnet sind, dass sie ein oder mehrere Fluide in einen Bereich der Maschine einspritzen, der zumindest den Trichter und das Bearbeitungsgestell umfasst, wobei die Fluide Fluide umfassen, die geeignet sind, um die Oxidationswirkung zu verringern, wie Stickstoff, Ascorbinsäure oder eine Kombination davon, wobei vorzugsweise zumindest einige der Düsen derart beschaffen sind, dass sie das Fluid im Gegenstrom in Bezug zur Fallrichtung des Fruchtfleischs durch das Gitter einspritzen.

13. Maschine nach einem oder mehreren der vorhergehenden Ansprüche, wobei die Walzen außenseitig durch eine Lochplatte bedeckt sind.

14. Maschine nach einem oder mehreren der vorhergehenden Ansprüche, wobei der Abstand zwischen den beiden gegenläufig rotierenden Walzen derart beschaffen ist, dass jede Banane zwischen den beiden Walzen gemäß ihrer Längslänge gegriffen wird.

15. Verfahren zum automatischen Schälen von Bananen, umfassend die Anordnung von zwei gegenläufig rotierenden Walzen, die ausgelegt sind, um eine Banane außenseitig an der Schale zu greifen, beispielsweise durch das Vorhandensein von Unebenheiten auf der äußeren Oberfläche der Walzen, und eines Trenngitters, aufweisend eine Vielzahl von Öffnungen und eine Schnittlinie, die derart angeordnet ist, dass sie die von den beiden gegenläufig rotierenden Walzen gezogene Banane in zwei Teile schneidet, wobei sich das Trenngitter zumindest teilweise unter den Walzen erstreckt, sodass ein rechter Trennweg und ein linker Trennweg gebildet und durch die jeweilige Walze und durch den jeweiligen Abschnitt des Gitters, der der Walze zugewandt ist, begrenzt werden, wobei das Verfahren die Drehung der beiden Walzen und die Zuführung der Bananen zu den Walzen bereitstellt, indem diese auf die Walzen fallen gelassen werden, sodass die Walzen die ganze Banane an der Schale greifen und sie auf die Schnittlinie ziehen, wodurch ihre Trennung in zwei Teile bewirkt wird, und wobei durch diese Drehung ein abgeschnittener Teil von der linken Walze entlang der linken Trennbahn weitergezogen wird, wobei das Fruchtfleisch mit dem Trenngitter in Kontakt ist und die Schale auf der Oberfläche der linken Walze gehalten wird, und der andere Teil von der rechten Walze entlang der rechten Trennbahn weitergezogen wird, wobei das Fruchtfleisch mit dem Trenngitter in Kontakt ist und die Schale auf der Oberfläche der rechten Walze gehalten wird, und wobei jede der beiden Bananenhälften abgestreift wird, sobald sie den Endteil des Gitters erreicht hat, und dieser Abstreifvorgang von einem Messer durchgeführt wird, das von einem Aktor bewegbar ist, der in einem Gehäuse an dem Endteil des Gitters angeordnet ist.

## Revendications

1. Machine pour peler des bananes comprenant :
- au moins un couple de rouleaux contrarotatifs (1sx, 1dx) disposés à une certaine distance entre eux et configurés de manière à saisir la banane par la peau et à l'entraîner dans un berceau de séparation grâce à leur rotation ;
- où :
- le berceau de séparation comprend une grille (60) disposée au moins partiellement sous lesdits deux rouleaux contrarotatifs et configurée pour permettre le passage de la chair et bloquer la peau ;
- et où il est prévu une ligne de coupe (74sup, 61) disposée au-dessus de la grille (60) dans une position telle qu'elle provoque, lors de l'utilisation, la séparation de la banane entraînée par lesdits deux rouleaux en au moins deux parties (300sx, 300dx), la grille formant un dossier droit (62dx) à droite de ladite ligne de coupe et un dossier gauche (62sn) à gauche de ladite ligne de coupe et qui forment deux surfaces de glissement pour le produit coupé, le dossier droit se trouvant au moins partiellement sous le rouleau droit correspondant (1dx) et le dossier gauche se trouvant au moins partiellement sous le rouleau gauche (1sx) et tous deux à une certaine distance du rouleau respectif ;
**caractérisée en ce que** :
les deux extrémités desdits dossier droit (62dx) et gauche (62sx) opposées à ladite ligne de coupe (74sup, 61) comprennent respectivement une deuxième et une troisième ligne de coupe (74sn, 74dx), lesdites deuxième et troisième lignes de coupe se présentant sous la forme d'une deuxième et d'une troisième lame (74sn, 74dx) insérées respectivement dans un logement (73sx, 73dx), lesdites deuxième et troisième lames étant mobiles au moyen d'au moins un actionneur (71a, 71c) auquel elles sont reliées.

2. Machine selon la revendication 1, ladite ligne de coupe s'étendant elle-même au moins partiellement le long de la direction longitudinale desdits deux rouleaux, de préférence la ligne de coupe étant disposée dans la ligne centrale de la distance minimale (nip) entre les deux surfaces externes des rouleaux contrarotatifs.

3. Machine selon l'une ou plusieurs des revendications précédentes, ladite ligne de coupe comprenant au moins une lame de coupe (74sup), de préférence un actionneur (71b) étant compris relié à ladite lame de coupe (74sup) de manière à déplacer la lame pour faciliter la coupe, de préférence selon un mouvement alternatif avant/arrière.

4. Machine selon l'une ou plusieurs des revendications précédentes, ladite ligne de coupe comprenant une forme en forme de cuspide de ladite grille.

5. Machine selon l'une ou plusieurs des revendications précédentes, ladite cuspide comprenant un logement longitudinal (73sup) pour disposer ladite lame de coupe (74sup).

6. Machine selon la revendication 1, lesdites deuxième et troisième lames étant mobiles selon un mouvement alternatif avant/arrière.

7. Machine selon l'une ou plusieurs des revendications précédentes, lesdits dossiers droit (62dx) et dossier gauche (62sx) ayant un profil incurvé, de préférence le rayon de courbure (R) dudit profil incurvé des dossiers et le rayon de courbure des rouleaux étant tels que lesdits dossiers maintiennent une distance constante ou sensiblement constante par rapport à au moins une partie de ladite surface externe du rouleau à laquelle ils font face.

8. Machine selon l'une ou plusieurs des revendications précédentes, ladite grille étant formée par un paquet de lamelles (61) tassées les unes contre les autres à une distance prédéterminée, de préférence chaque lamelle (61) ayant la même forme que les autres et fournit une cuspide (61) d'où partent le dossier droit (62dx) et le dossier gauche (62sx).

9. Machine selon l'une ou plusieurs des revendications précédentes, une trémie (16) étant prévue sous ladite grille (60) pour recueillir la chair passant à travers la grille.

10. Machine selon l'une ou plusieurs des revendications précédentes, un ou plusieurs transporteurs latéraux à vis (120) étant compris, de préférence deux transporteurs latéraux à vis disposés sur les deux côtés de la machine, pour recueillir les peaux.

11. Machine selon l'une ou plusieurs des revendications précédentes, comprenant en outre un ou plusieurs racleurs disposés à proximité des rouleaux de manière à faciliter le détachement des peaux attachées aux rouleaux et à faciliter leur chute dans les transporteurs latéraux à vis (120).

12. Machine selon l'une ou plusieurs des revendications précédentes, comprenant une ou plusieurs buses disposées de manière à injecter un ou plusieurs fluides dans une zone de la machine comprenant au moins ladite trémie et le berceau de traitement, lesdits fluides comprenant des fluides appropriés pour réduire l'effet d'oxydation, tels que l'azote, l'acide ascorbique ou une combinaison de ceux-ci, de préférence au moins certaines desdites buses étant telles qu'elles injectent le fluide à contre-courant par rapport à la direction de la chute de la chair à travers la grille.

13. Machine selon l'une ou plusieurs des revendications précédentes, les rouleaux étant recouverts extérieurement par une plaque perforée.

14. Machine selon l'une ou plusieurs des revendications précédentes, la distance entre lesdits deux rouleaux contrarotatifs étant telle que chaque banane est saisie entre lesdits deux rouleaux selon sa longueur longitudinale.

15. Procédé pour peler automatiquement des bananes et comprenant l'agencement de deux rouleaux contrarotatifs configurés pour saisir extérieurement une banane par la peau, par exemple par la présence d'aspérités sur la surface extérieure desdits rouleaux, et d'une grille de séparation comportant une pluralité d'ouvertures et une ligne de coupe disposée de manière à couper en deux parties la banane entraînée par lesdits deux rouleaux contrarotatifs, la grille de séparation s'étendant au moins partiellement sous lesdits rouleaux de sorte qu'un chemin de séparation droit et un chemin de séparation gauche sont formés et délimités par le rouleau respectif et par la partie respective de la grille faisant face au rouleau, le procédé prévoyant la rotation desdits deux rouleaux et l'alimentation des bananes vers les rouleaux en les laissant tomber sur les rouleaux de sorte que lesdits rouleaux saisissent la banane entière à partir de la peau et l'entraînent sur la ligne de coupe, provoquant ainsi sa séparation en deux parties et, par ladite rotation, une partie coupée continuant à être entraînée par le rouleau gauche le long du chemin de séparation gauche, la chair étant en contact avec la grille de séparation et la peau étant maintenue sur la surface du rouleau gauche, et l'autre partie continuant à être entraînée par le rouleau droit le long du chemin de séparation droit, la chair étant en contact avec la grille de séparation et la peau étant maintenue sur la surface du rouleau droit et chacune des deux moitiés de la banane étant raclée une fois qu'elle a atteint la partie d'extrémité de la grille, cette opération de raclage étant exécutée par une lame, déplaçable par un actionneur, placée dans un logement au niveau de ladite partie d'extrémité de la grille.
